# EUROPÄISCHE PATENTSCHRIFT

(11) **EP 0 731 878 B1**
(45) Veröffentlichungstag und Bekanntmachung des Hinweises auf die Patenterteilung: **28.07.1999**
(21) Anmeldenummer: 95916555.6
(22) Anmeldetag: 12.04.1995
(51) Int. Cl.: F02M 3/07, F02M 69/32, F16K 11/085

(54) **VORRICHTUNG ZUR REGELUNG DER LEERLAUFDREHZAHL EINER BRENNKRAFTMASCHINE**
DEVICE FOR REGULATING THE IDLING SPEED OF AN INTERNAL COMBUSTION ENGINE
DISPOSITIF DE REGULATION DU REGIME DE RALENTI D'UN MOTEUR A COMBUSTION INTERNE

(30) Priorität: 06.09.1994 DE 4431711
(43) Veröffentlichungstag der Anmeldung: 18.09.1996
(73) Patentinhaber: ROBERT BOSCH GMBH, 70442 Stuttgart (DE)
(72) Erfinder: WENDEL, Friedrich, D-71287 Weissach (DE); MEIWES, Johannes, D-71706 Markgröningen (DE); GERHARD, Albert, D-71732 Tamm (DE); HAMMER, Uwe, D-71701 Schwieberdingen (DE); DICK, Dieter, D-75417 Mühlacker (DE); TORNO, Robert, D-74321 Bietigheim-Bissingen (DE)
(86) Internationale Anmeldenummer: DE9500506
(87) Internationale Veröffentlichungsnummer: WO9607821

(56) Entgegenhaltungen:
- DE-A- 4 026 137
- FR-A- 2 176 102
- US-A- 4 982 760
- US-A- 5 170 761
- PATENT ABSTRACTS OF JAPAN vol. 7, no. 183 (M-235) 12. August 1983 & JP,A,58 085 338 (TOYOTA JIDOSHA KOGYO KK)
- PATENT ABSTRACTS OF JAPAN vol. 18, no. 691 (M-1731) 26. Dezember 1994 & JP,A,06 272 645 (TOYOTA MOTOR CORP) 27. September 1994
- SAE (SOCIETY OF AUTOMOTIVE ENGINEERS), TECHNICAL PAPER SERIES 920294 Seiten 400 - 407 KENICHI HARADA ET AL. 'Development of Air-Assisted Injector System' in der Anmeldung erwähnt

## Beschreibung

### Stand der Technik

Die Erfindung geht aus von einer Vorrichtung zur Regelung der Leerlaufdrehzahl einer Brennkraftmaschine nach der Gattung des Patentanspruchs 1. Es ist schon eine derartige Vorrichtung bekannt (JP-A-58 085 388), bei der ein erstes Ventilschließglied einen ersten Ventilöffnungsquerschnitt zu einer ersten Strömungsleitung und ein zweites Ventilschließglied einen zweiten Ventilöffnungsquerschnitt zu einer zweiten Strömungsleitung steuert. Die erste Strömungsleitung ist dabei mit einer Brennstoffzumeßeinrichtung der Brennkraftmaschine verbunden und dient der Zufuhr eines Betriebsmittels, insbesondere von Ansaugluft, zur Brennstoffzumeßeinrichtung zwecks luftunterstützter Brennstoffeinspritzung. Die zweite Strömungsleitung ist direkt mit einem Ansaugkanal der Brennkraftmaschine stromabwärts einer im Ansaugkanal angeordneten Drosselklappe verbunden. Bei dieser Vorrichtung führt der Einlaß direkt in das Innere des Gehäuses der Vorrichtung und wird von dem volumenmäßig großen Inneren in die Strömungsleitungen mit wesentlich geringeren Querschnitten abgesteuert, wodurch es zu unerwünschten Strömungsungleichmäßigkeiten in den Strömungsleitungen kommt.

Bei einer anderen bekannten Vorrichtung (Development of air-assisted injector system, SAE (Society of Automotive Engineers), Technical Paper series 920294, Seiten 57/58, 1992) sind erstes und zweites Ventilschließglied mittels eines elektromotorischen Stellantriebes über ein Verstellglied entgegen der Kraft einer Ventilschließfeder in Ventilöffnungsrichtung verstellbar, wobei bei nicht aktiviertem Stellantrieb die Ventilschließglieder von der Ventilschließfeder in einer Ventilschließstellung gehalten werden. Die bekannte Vorrichtung hat den Nachteil, daß wegen der rotationssymmetrischen Ausbildung der Ventilöffnungen und der damit zusammenwirkenden Ventilschließglieder beim axialen Verstellen des Ventilschließglieds bei Durchfahren einer extrem kurzen Hubstrecke praktisch der volle Öffnungsquerschnitt freigegeben wird, so daß eine gezielte Freigabe nur eines definierten Teilquerschnitts technisch nur schwer zu realisieren ist, insbesondere wenn, wie beim erläuterten Stand der Technik, zwei Ventilschließglieder mittels eines einzigen stangenförmigen Stellglieds betätigt werden. Außerdem ergeben sich ein großer Platzbedarf sowie ein hoher Aufwand bei Fertigung und Montage.

### Vorteile der Erfindung

Die erfindungsgemäße Vorrichtung zur Regelung der Leerlaufdrehzahl einer Brennkraftmaschine hat demgegenüber den Vorteil, daß eine Ventilöffnung mit Hilfe eines Ventilschiebers, welcher die zugeordnete Ventilöffnung ausgehend von einem Punkt ihres Randbereichs freigibt, kontinuierlich und bis zur Erzielung eines vorgegebenen freien Strömungsquerschnitts geöffnet werden kann. Diese gezielte Freigabe eines definierten Strömungsquerschnitts läßt sich dabei ohne extreme Anforderungen an die Genauigkeit des elektromechanischen Stellantriebs verwirklichen, da der Ventilschieber im Zuge einer beispielsweise linearen Bewegung gegenüber der zugeordneten Ventilöffnung eine zunehmend größere Fläche derselben freigibt, so daß bis zum vollständigen Öffnen eine gewisse Drosselwirkung erhalten bleibt.

Dabei besteht in Ausgestaltung der Erfindung die vorteilhafte Möglichkeit, die Form der Öffnung und/oder des Schiebers in der Weise an die Charakteristik des Stellantriebs anzupassen, daß ein gewünschter charakteristischer Verlauf der Freigabe des Strömungsquerschnitts in Abhängigkeit von der Betätigung des Stellantriebs erreichbar ist. Außerdem wird bei der Vorrichtung nach der Erfindung der Vorteil erzielt, daß sie einfach herzustellen und zu montieren ist und auch einen geringeren Bauraum erfordert.

Durch die in dem abhängigen Anspruch aufgeführten Maßnahmen sind vorteilhafte Weiterbildungen und Verbesserungen der erfindungsgemäßen Vorrichtung möglich.

### Zeichnung

Die Erfindung wird nachstehend anhand einer Zeichnung noch näher erläutert.

Es zeigen:
- Fig. 1: eine schematische Darstellung einer bevorzugten Anordnung der Ventileinrichtungen einer Vorrichtung gemäß der Erfindung;
- Fig. 2: ein bevorzugtes Ausführungsbeispiel einer Vorrichtung gemäß der Erfindung.

### Beschreibung des Ausführungsbeispieles

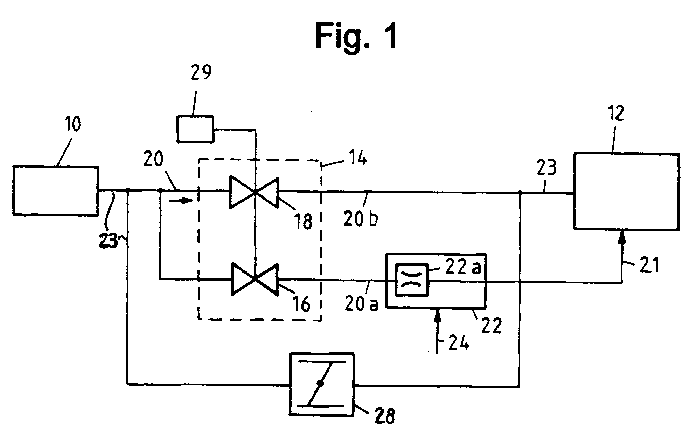

Ehe nachstehend detailliert auf das Ausführungsbeispiel der Erfindung eingegangen wird, soll zunächst auf ein bevorzugtes Grundprinzip einer Vorrichtung zur Regelung der Leerlaufdrehzahl einer Brennkraftmaschine mit luftunterstützter Brennstoffeinspritzung anhand der schematischen Darstellung gemäß Fig. 1 näher eingegangen werden.

Im einzelnen zeigt Fig. 1 zwischen einer Betriebsmittelquelle 10 und einer Brennkraftmaschine 12 eine Ventilanordnung 14 mit einem ersten Ventil 18, welches als Hauptventil angesehen werden kann, und mit einem zweiten Ventil 16, welches als Nebenventil bzw. Luftumfassungsventil dient. Die beiden Ventile 16, 18 sind im Prinzip parallel zueinander angeordnet, wobei jedoch in Reihe zu dem Ventil 16 eine Kraftstoffzumeßeinrichtung 22, insbesondere ein Satz von Einspritzdüsen liegt. Der Kraftstoffzumeßeinrichtung 22 wird über eine Kraftstoffleitung 24 in bekannter, hier nicht näher zu erläuternder Weise Kraftstoff, beispielsweise von einer gesteuerten Kraftstoffpumpe (nicht gezeigt) zugeführt. Die der Kraftstoffzumeßeinrichtung 22 von der Auslaßseite des Ventils 16 über eine erste Strömungsleitung 20a zugeführte Betriebsmittelmenge, Ansaug- oder Verbrennungsluft bzw. ein Gemisch von Frischluft und zurückgeführten Abgasen, dient der sogenannten "Luftumfassung" für die Einspritzdüse(n) der Kraftstoffzumeßeinrichtung 22, wobei die Drosselwirkung der Einspritzdüse(n) in Fig. 1 durch eine Drosselstelle 22a der Kraftstoffzumeßeinrichtung angedeutet ist. Das in der Kraftstoffzumeßeinrichtung 22 mit der Umfassungsluft erzeugte Kraftstoffgemisch wird schließlich der Brennkraftmaschine 12 zugeführt, wie dies in Fig. 1 schematisch durch eine Gemisch-Einlaßleitung 21 angedeutet ist, beispielsweise in die Einzelsaugrohre der Zylinder unmittelbar vor die Einlaßventile. Die Auslaßseite des anderen Ventils 18 ist dagegen über eine zweite Strömungsleitung 20b direkt mit einem Ansaugkanal 23 der Brennkraftmaschine 12 verbunden, um diesem Leerlaufluft in kontrollierter Weise zuzuführen. Außerdem ist parallel zu der vorstehend beschriebenen Ventilanordnung 14 zwischen der Betriebsmittelquelle 10 und der Brennkraftmaschine 12 bzw. deren Ansaugkanal 23 ein Parallelpfad vorgesehen, in den in üblicher Weise eine Drosselklappe 28 eingefügt ist. Wenn die Drosselklappe 28 wie in Fig. 1 angedeutet, ihre Schließstellung einnimmt, oder nahezu geschlossen ist, wird das Betriebsmittel bzw. die Verbrennungsluft der Brennkraftmaschine 12 über die Ventilanordnung auf folgende Weise zugeführt: Bei der Betätigung der Ventilanordnung mit Hilfe eines zugeordneten, beispielsweise elektromechanischen Stellantriebs 29 öffnet zuerst das erste Ventil 16, so daß der Kraftstoffzumeßeinrichtung 22 Umfassungsluft zugeführt wird, die für eine effektive Gemischaufbereitung hinsichtlich des der Kraftstoffzumeßeinrichtung 22 über die Kraftstoffleitung 24 zugeführten Kraftstoffs sorgt. Erst wenn das Ventil 16 ausreichend geöffnet ist, um der Kraftstoffzumeßeinrichtung 22 die gewünschte Betriebsmittelbzw. Verbrennungsluftmenge zuzuführen, öffnet das zweite Ventil 18, um der Brennkraftmaschine 12 in üblicher Weise die für das Aufrechterhalten der Leerlaufdrehzahl der Brennkraftmaschine 12 zusätzlich zu der über die Gemisch-Einlaßleitung 21 zugeführten Umfassungsluft erforderliche Betriebsmittel- bzw. Verbrennungsluftmenge zuzuführen. Dabei ist zu beachten, daß die durch die Drosselstelle 22a angedeutete Drosselwirkung der Elemente der Kraft-stoffzumeßeinrichtung 22 konstant und größer ist als die Drosselwirkung des zweiten Ventils 18 im voll geöffneten Zustand desselben.

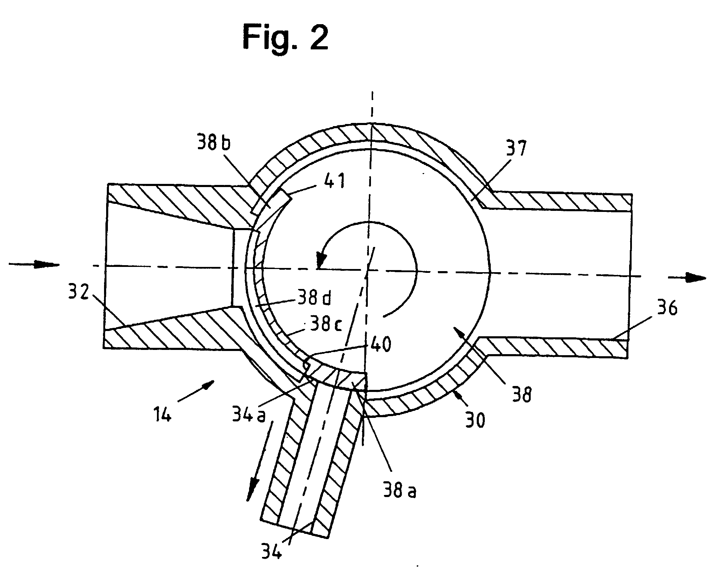

Wie Fig. 2 zeigt, kann die vorstehend anhand von Fig. 1 erläuterte Ventilanordnung 14 gemäß einem bevorzugten Ausführungsbeispiel der Erfindung als Drehventilanordnung bzw. Drehsteller realisiert werden. Dieser Drehsteller umfaßt gemäß Fig. 2 ein Gehäuse 30 mit einem Einlaß 32, einem ersten Auslaß 34 und einem zweiten Auslaß 36. Das Gehäuse 30 definiert eine zylindrische Kammer 37, in der ein drehbares Bauteil 38 angeordnet ist, welches durch einen zugeordneten elektromechanischen Stellantrieb 29 (Fig. 1), wie durch einen Pfeil angedeutet, zu einer Drehung im Gegenuhrzeigersinn antreibbar ist.

Das drehbare Bauteil 38 trägt zwei einstückig angeformte oder auch in anderer geeigneter Weise fest angebrachte Ventilschließglieder 38a und 38b, beispielsweise in Form von Rohrabschnitten, die jeweils als gewölbte Ventilschieber ausgebildet sind und jeweils eine gewölbte Dichtfläche am Umfang aufweisen, die komplementär zu einer die zugeordnete Ventilöffnung des Auslasses 34 umgebenden Dichtfläche 34a am Ventilgehäuse 30 ausgebildet sind und zur Freigabe eines gewünschten Ventilöffnungsquerschnitts gleitverschieblich gegenüber der jeweils zugeordneten Dichtfläche 34a verstellbar sind.

Bei dem Ausführungsbeispiel gemäß Fig. 2, bei dem ein Gehäuse 30 mit einem Einlaß 32, einem ersten Auslaß 34 und einem zweiten Auslaß 36 vorgesehen ist, in welchem ein drehbares Bauteil 38 mit zwei zu einer nachstehend der Einfachheit halber ebenfalls als Ventilschließglied bezeichneten Einheit 38c zusammengefaßten Ventilschließgliedern, dem ersten Ventilschließglied 38a und dem zweiten Ventilschließglied 38b angeordnet ist, liegt der erste Auslaß 34 in Drehrichtung des drehbaren Bauteils 38, d.h. im Gegenuhrzeigersinn hinter dem Einlaß 32. In der in Fig.2 gezeigten Position des drehbaren Bauteils 38 sind der Einlaß 32 und der erste Auslaß 34 geschlossen. Wenn nun das drehbare Bauteil 38 im Gegenuhrzeigersinn verdreht wird, dann wird von dem sich über einen relativ großen Bogenwinkel von beispielsweise mehr als 90° erstreckenden Ventilschließglied 38c zunächst der erste Auslaß 34 zunehmend weiter zu einer in der äußeren Mantelfläche des Ventilschließglieds 38c vorgesehenen Aussparung 38d geöffnet, so daß Verbrennungsluft vom Einlaß 32 über die als Verbindungskanal wirkende Aussparung 38d bis zur hinteren Steuerkante 40 am ersten Ventilschließglied 38a und dann nur zu dem ersten Auslaß 34 strömen kann. Dabei bleibt der Einlaß 32 gegenüber der zylindrischen Kammer 37 im Inneren des Gehäuses 30 zunächst geschlossen. Erst wenn der erste Auslaß 34 in dem durch die konstruktive Ausgestaltung des Gehäuses 30 einerseits und des Ventilschließglieds 38c andererseits vorgegebenen Ausmaße geöffnet ist, gelangt die in Drehrichtung hintere Kante 41 des Ventilschließglieds 38c in den Bereich der Ventilöffnung am Einlaß 32, so daß dieser zunehmend weiter zur Kammer 37 hin geöffnet wird und über die in dem Gehäuse 30 vorgesehene Kammer 37 Verbrennungsluft zu dem zweiten Auslaß 36 strömen läßt. Es wird also wieder zunächst ein Strömungsquerschnitt für den ersten Auslaß 34 freigegeben und dann mit vorgegebener Verzögerung ein paralleler Strömungsquerschnitt für die Zuführung von Verbrennungsluft zur Leerlaufregelung vom Einlaß 32 zum zweiten Auslaß 36. Dabei gewährleistet das als Ventilschieber ausgebildete drehbare, die beiden separaten Ventilschließglieder 38a und 38b ersetzende bzw. zusammenfassende Ventilschließglied 38c in seiner in Fig. 2 gezeigten Schließstellung ein praktisch leckfreies Schließen der Ventilanordnung. Der Einlaß 32 und der erste Auslaß 34 können in Umfangsrichtung des Gehäuses 30 gesehen unmittelbar nebeneinander liegend ausgebildet sein.

## Patentansprüche

1. Vorrichtung zur Regelung der Leerlaufdrehzahl einer Brennkraftmaschine (12) durch Steuerung einer über wenigstens zwei Strömungsleitungen (20a, 20b) der Brennkraftmaschine aus einer Betriebsmittelquelle (10) zuführbaren Betriebsmittelmenge, wobei ein erster Ventilöffnungsquerschnitt an einer ersten Ventilöffnung für eine erste Strömungsleitung (20a) und ein zweiter Ventilöffnungsquerschnitt an einer zweiten Ventilöffnung für eine zweite Strömungsleitung (20b) mittels zugeordneter Ventilschließeinrichtungen steuerbar sind, wobei in eingebauten Zustand die erste Strömungsleitung zu einer Kraftstoffzumeßeinrichtung (22) und die zweite Strömungsleitung zu einem Ansaugkanal (23) der Brennkraftmaschine stromabwärts einer im Ansaugkanal angeordneten Drosselklappe (28) führt und die Ventilchließeinrichtungen mittels eines Stellantriebs (29) mit zunehmender Aktivierung des Stellantriebes aus einer Schließstellung in eine Öffnungsstellung verstellbar sind, wobei die Ventilschließeinrichtungen ein erstes Ventilschließglied (38a) und ein zweites Ventilschließglied (38b) umfassen, welche als Ventilschieber ausgebildet sind, eine komplementär zu einer die erste Ventilöffnung umgebenden Dichtfläche (34a) eines Gehäuses (30) ausgebildete Dichtfläche aufweisen und an einem in dem Gehäuse (30) drehbaren Bauteil (38, 38c) vorgesehen und zu einer einzigen, sich über einen Bogenwinkel erstreckenden Einheit (38c) zusammengefaßt sind, **dadurch gekennzeichnet,** daß die Einheit (38c) an ihrer äußeren Mantelfläche mit einer sich über einen Bogenwinkel zwischen den Ventilschließgliedern (38a, 38b) erstreckenden Aussparung (38d) versehen ist, durch welche beim Verdrehen des drehbaren Bauteils (38) ausgehend von einer Schließstellung, in der ein mit der Betriebsmittelquelle (10) verbundener Einlaß (32) des Gehäuses (30) gegenüber dem Inneren (37) des Gehäuses verschlossen ist, zunächst über den ersten Ventilöffnungsquerschnitt an der ersten Ventilöffnung einem ersten Auslaß (34), der die erste von dem Gehäuse (30) abzweigende Strömungsleitung (20a) bildet, eine zunehmend größere Betriebsmittelmenge zuführbar ist und daß erst dann bei einer weiteren Drehung des drehbaren Bauteils (38) in dem vorgegebenen Drehsinn durch das zweite Ventilschließglied (38b) über den zweiten Ventilöffnungsquerschnitt an der zweiten Ventilöffnung und das innere (37) des Gehäuses (30) ein Strömungsquerschnitt für die zweite Strömungsleitung (20b) freigebbar ist, die über einen zweiten Auslaß (36) des Gehäuses (30) führt (Fig. 2).

2. Vorrichtung nach Anspruch 1, dadurch gekennzeichnet, daß wenigstens im Bereich der Aussparung (38d) zwischen dem Einlaß (32) und der Dichtfläche (34a) an der ersten Ventilöffnung des ersten Auslasses (34) eine das Innere (37) des Gehäuses (30) begrenzende Innenwand einen größeren Durchmesser als die äußere Mantelfläche der Einheit (38c) hat.

## Claims

1. Device for regulating the idling speed of an internal combustion engine (12) by controlling a quantity of operating medium which can be fed from an operating-medium source (10) to the internal combustion engine via at least two flow lines (20a, 20b), it being possible to control a first valve opening cross section at a first valve opening for a first flow line (20a) and a second valve opening cross section at a second valve opening for a second flow line (20b) by means of associated valve closing devices, it being the case that, when installed, the first flow line leads to a fuel metering device (22) and the second flow line leads to an intake duct (23) of the internal combustion engine, downstream of a throttle (28) which is arranged in the intake duct, and the valve closing devices can be adjusted from a closed position into an open position by means of an actuating drive (29) as the actuating drive is increasingly activated, the valve closing devices comprising a first valve closing element (38a) and a second valve closing element (38b), which are designed as valve slides, have a sealing surface which is designed to be complementary to a sealing surface (34a) which surrounds the first valve opening and belongs to a housing (30), are provided on a component (38, 38c) that can rotate in the housing (30) and are combined into a single unit (38c) that extends over a circular arc, characterized in that the unit (38c) is provided on its outer covering surface with a cutout (38d) which extends over a circular arc between the valve closing elements (38a, 38b) and through which, when the rotatable component (38) is rotated, beginning from a closed position, in which an inlet (32) to the housing (30) is closed with respect to the interior (37) of the housing, the said inlet being connected to the operating-medium source (10), firstly an increasingly large quantity of operating medium can be fed, via the first valve opening cross section at the first valve opening, to a first outlet (34), which forms the first flow line (20a) that branches off from the housing (30), and in that only then, given further rotation of the rotatable component (38) in the predefined direction of rotation, can a flow cross section for the second flow line (20b), which leads via a second outlet (36) from the housing (30), be opened by the second valve closing element (38b), via the second valve opening cross section at the second valve opening and via the interior (37) of the housing (30) (Fig. 2).

2. Device according to Claim 1, characterized in that, at least in the region of the cutout (38d) between the inlet (32) and the sealing surface (34a) at the first valve opening of the first outlet (34), an inner wall that bounds the interior (37) of the housing (30) has a larger diameter than the outer covering surface of the unit (38c).

## Revendications

1. Dispositif servant à réguler le régime de ralenti d'un moteur à combustion interne (12) en commandant une quantité de moyen de fonctionnement pouvant être amenée par au moins deux lignes d'écoulement (20a, 20b) du moteur à combustion interne à partir d'une source (10) de moyen de fonctionnement, une première section transversale pouvant être commandée sur une première ouverture de vanne pour une première ligne d'écoulement (20a) et une deuxième section transversale d'ouverture de vanne pouvant être commandée sur une deuxième ouverture de vanne pour une deuxième ligne d'écoulement (20b) au moyen de dispositifs de fermeture de vannes associés, la première ligne d'écoulement quand elle est en position montée conduisant à un système de dosage de carburant (22) et la deuxième ligne d'écoulement à un canal d'aspiration (23) du moteur à combustion interne en aval d'un clapet d'étranglement (28), qui est disposé dans le canal d'aspiration, et les dispositifs de fermeture de vannes pouvant être réglés au moyen d'un servomécanisme (29) avec une activation croissante du servomécanisme à partir d'une position de fermeture dans une position d'ouverture, dispositif dans lequel les systèmes de fermeture de vanne comprennent un premier organe de fermeture de vanne (38a) et un deuxième organe de fermeture de vanne (38b), qui sont constitués sous la forme de tiroirs de vanne, présentent une surface d'étanchéité constituée en complément d'une surface d'étanchéité (34a) d'un boîtier (30), qui entoure la première ouverture de vanne et qui sont prévus sur une pièce constitutive (38, 38c) qui peut tourner dans le boîtier (30) et qui sont réunis en une seule unité (38c) qui s'étend sur un arc de cercle,
caractérisé en ce que
- l'unité (38c) est pourvue sur sa surface enveloppe extérieure d'un évidement (38d), qui s'étend sur un arc de cercle entre les organes de fermeture de vanne (38a, 38b), évidement grâce auquel, lorsqu'on fait tourner la pièce constitutive (38), qui peut tourner, en partant d'une position de fermeture, dans laquelle une entrée (32) du boîtier (30), reliée à la source du moyen de fonctionnement (10), est fermée par rapport à l'intérieur (37) du boîtier, on peut amener tout d'abord en plus une plus grande quantité de moyen de fonctionnement au moyen de la première section transversale d'ouverture de vanne sur la première ouverture de vanne à une première sortie (34), qui constitue la première ligne d'écoulement (20a) dérivant du boîtier (30), et
- c'est seulement lors de la poursuite de la rotation de la pièce constitutive (38), qui peut tourner, dans le sens de rotation prédéfini, au moyen du deuxième organe de fermeture (38b) via la seconde section transversale d'ouverture de vanne sur la seconde ouverture de vanne et l'intérieur (37) du boîtier (30) que l'on peut libérer une section transversale d'écoulement pour la seconde ligne d'écoulement (20b), qui passe par une deuxième sortie (36) du boîtier (30) (figure 2).

2. Dispositif selon la revendication 1,
caractérisé en ce qu'
au moins dans la zone de l'évidement (38d) entre l'entrée (32) et la surface d'étanchéité (34a) sur la première ouverture de vanne de la première sortie (34) une paroi intérieure qui délimite l'intérieur (37) du boîtier (30) a un diamètre plus grand que la surface enveloppe extérieure de l'unité (38c).
